# EUROPÄISCHE PATENTSCHRIFT

(11) **EP 2 142 592 B1**
(45) Veröffentlichungstag und Bekanntmachung des Hinweises auf die Patenterteilung: **30.01.2013**
(21) Anmeldenummer: 08734738.1
(22) Anmeldetag: 22.03.2008
(51) Int. Cl.: C08K 3/34, C08K 3/24, C08K 3/38, C08K 5/09, C08K 5/42, C08K 5/51, C08L 69/00

(54) **POLYCARBONAT-FORMMASSEN**
POLYCARBONATE MOLDING COMPOSITIONS
MATIÈRES MOULABLES AUX POLYCARBONATES

(30) Priorität: 05.04.2007 DE 102007016786
(43) Veröffentlichungstag der Anmeldung: 13.01.2010
(73) Patentinhaber: Bayer MaterialScience AG, 51368 Leverkusen (DE)
(72) Erfinder: SEIDEL, Andreas, 41542 Dormagen (DE); WENZ, Eckhard, 50679 Köln (DE); NAWROTH, Manfred, 51688 Wipperfürth (DE)
(86) Internationale Anmeldenummer: PCT/EP2008/002326
(87) Internationale Veröffentlichungsnummer: WO 2008/122359

(56) Entgegenhaltungen:
- DE-A1- 19 753 542
- JP-A- 2005 048 048
- US-A1- 2006 287 422

## Beschreibung

Die Erfindung betrifft talkverstärkte Polycarbonat-Zusammensetzungen, die gegenüber dem bekannten Stand der Technik eine verbesserte Duktilität, Wärmeformbeständigkeit und thermische Stabilität bei der Compoundierung und Verarbeitung (Formgebung) aufweisen, sowie deren Verwendung zur Herstellung von Formkörpem. Ein weiterer Gegenstand der Erfindung betrifft verzugsarme, maßstabile, spannungsarme und duktile Formteile hergestellt im Zweikomponentenspritzguss, bei denen eine transparente oder transluzente Polycarbonatformmasse als Erstkomponente vollständig oder partiell mit talkverstärkten Polycarbonat-Zusammensetzungen hoher Wärmeformbeständigkeit als Zweitkomponente hinterspritzt wurde und hieraus eine stabile Materialanbindung der Zweit- an die Erstkomponente resultiert.

Die EP-A 0 391 413 offenbart schlagzähmodifizierte Polycarbonat-Zusammensetzungen, welche sich durch einen reduzierten thermischen Ausdehnungskoeffizienten, eine hohe Tieftemperaturduktilität und gute Wärmeformbeständigkeit auszeichnen. Die offenbarten Zusammensetzungen enthalten 40 bis 80 Gew.-% Polycarbonat und 4 bis 18 Gew.-% eines mineralischen Füllstoffs mit plättchenförmiger Partikelgeometrie, z.B. spezielle Talktypen. Der Einsatz von Säuren als Additiv wird in dieser Anmeldung nicht offenbart.

Die EP-A 0 452 788 offenbart talkgefüllte schlagzähmodifizierte Polycarbonat-Zusammensetzungen zur Herstellung von Formteilen mit guten mechanischen Eigenschaften und reduziertem Oberflächenglanz, welche 10 bis 80 Gew.-Teile Polycarbonat, 90 bis 20 Gew.-Teile ABS und 2 bis 25 Gew.-Teile bezogen auf die Summe aus Polycarbonat und ABS an Talk mit einer mittleren Partikelgröße von 1,5 bis 20 µm enthalten. Der Einsatz von Säuren als Additiv wird in dieser Anmeldung nicht offenbart.

Die WO 98/51737 offenbart mineralgefüllte schlagzähmodifizierte Polycarbonat-Zusammensetzungen mit verbesserter Wärmeformbeständigkeit, Tieftemperaturzähigkeit, Dimensionsstabilität und Schmelzefließfähigkeit, welche 65 bis 85 Gew.-Teile Polycarbonat, 10 bis 50 Gew.-Teile ABS und 1 bis 15 Gew.-Teile partikulären mineralischen Füllstoff (z.B. Talk) mit einer mittleren größten Partikelausdehnung von 0,1 bis 30 µm enthalten. Der Einsatz von Säuren als Additiv wird in dieser Anmeldung nicht offenbart.

Die WO-A 99/28386 offenbart Zusammensetzungen enthaltend Polycarbonat, Pfropfpolymerisat basierend auf einem Elastomeren mit einer Glasübergangstemperatur von unter 10°C, Copolymerisat, Füllstoff (z.B. Talk) und eine niedermolekulare halogenfreie Säure, dadurch gekennzeichnet, dass diese Zusammensetzungen mindestens einen aromatischen oder teilaromatischen Polyester oder deren Mischung enthalten. Die Zusammensetzung weisen verbesserte mechanische Eigenschaften (z.B. Reißdehnung) und eine verbesserte Schmelzefließfähigkeit auf.

Die Aufgabe dieser Erfindung bestand darin, eine Polycarbonat-Zusammensetzungen mit verbesserter Duktilität, Wärmeformbeständigkeit sowie einer verbesserten thermischen Stabilität bei der Compoundierung wie auch bei der Verarbeitung (Formgebung) der Formmassen bereitzustellen.

Überraschend wurde gefunden, dass Zusammensetzungen gemäß Anspruch 1 enthaltend
A) 10 bis 100 Gew.-Teile, bevorzugt 80 bis 100 Gew.-Teile, besonders bevorzugt 85 bis 100 Gew.-Teile, insbesondere auch 100 Gew.-Teile bezogen auf die Summe der Komponenten A und B an Polycarbonat, Polyestercarbonat oder eine Mischung daraus,
B) 0 bis 90 Gew.-Teile, bevorzugt 0-20 Gew.-Teile, besonders bevorzugt 0-15 Gew.-Teile, insbesondere auch 0 Gew.-Teile bezogen auf die Summe der Komponenten A und B an einem Polymerisat ausgewählt aus mindestens einem der Gruppe bestehend aus Pfropfpolymerisat hergestellt im Emulsionspolymerisationsverfahren, Pfropfpolymerisat hergestellt im Massepolymerisationsverfahren, kautschukfreies Vinylhomopolymerisat und kautschukfreies Vinylcopolymerisat,
C) 7 bis 30 Gew.-%, bevorzugt 7 bis 22 Gew.-%, besonders bevorzugt 7 bis 15 Gew.-%, ganz besonders bevorzugt 7 bis 12 Gew.-% bezogen auf die Gesamtzusammensetzung Talk, bevorzugt ein Talk mit einem Al₂O₃-Gehalt < 1,0 Gew.-%, insbesondere ein Talk mit einem mittleren Partikeldurchmesser d₅₀ von < 2 µm,
D) 0,01 bis 1 Gew.-%, bevorzugt 0,01 bis 0,5 Gew.-%, besonders bevorzugt 0,02 bis 0,4 Gew.-% bezogen auf die Gesamtzusammensetzung einer besonderen Brönstedt-Säure,
E) 0 bis 20 Gew.-%, bevorzugt 0 bis 5 Gew.-%, besonders bevorzugt 0,2 bis 4 Gew.-% mindestens eines Polymeradditivs,
wobei die Zusammensetzung frei ist von aromatischen oder teilaromatischen Polyestern, und
wobei die Summe der Gew.-% der Komponenten A und B in der Gesamtzusammensetzung sich berechnet aus der Differenz von 100 Gew.-% minus der Summe der Gew.-% der Komponenten C, D und E, und
wobei unter Gesamtzusammensetzung die Summe der Gew.-% aller Komponenten A + B+ C + D + E = 100 Gew.-% zu verstehen ist,
die erfindungsgemäße Aufgabe lösen.

Eine weitere Aufgabe einer bevorzugten Ausführungsform der Erfindung ist es, bei Verarbeitung von talkgefüllten Polycarbonat-Zusammensetzungen die Neigung zum Auftreten von Verarbeitungsschlieren auf der Oberfläche von im Spritzgussverfahren hergestellten Formkörpern zu vermeiden.

Überraschend wurde gefunden, dass diese zusätzliche Aufgabe durch die oben genannten erfindungsgemäßen Zusammensetzungen gelöst wird, wenn diese als Komponente D mindestens eine Brönstedt-Säure enthalten, die sich unter den thermischen Bedingungen der Compoundierung zersetzt (d.h. bei Temperaturen von 200 bis 320°C, bevorzugt bei 240 bis 320°C, besonders bevorzugt bei 240 bis 300°C), unter Abspaltung von Wassen, Kohlenstoffmenoxid und/oder Kohlenstoffdioxid rückstandlos gesetzt.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 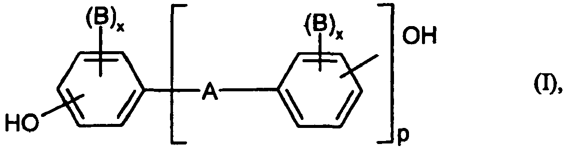 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 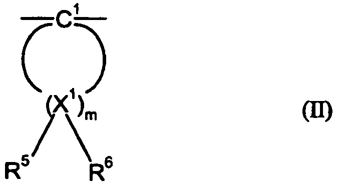 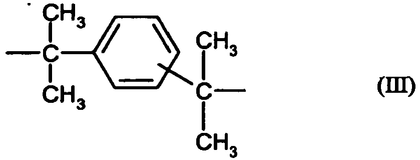
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,3,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytriphenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B ist ausgewählt aus mindestens einem Vertreter der Gruppe der Pfropfpolymerisate B.1 oder der kautschukfreien (Co)Polymerisate B.2.

Die Komponente B.1 umfasst ein oder mehrere Pfropfpolymerisate von

| | |
|---|---|
| B.1.1 | 5 bis 95, vorzugsweise 30 bis 90 Gew.-%, wenigstens eines Vinylmonomeren auf |
| B.1.2 | 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C. |

Die Pfropfgrundlage B.1.2 hat im allgemeinen eine mittlere Teilchengröße (d₅₀-Wert) von 0,05 bis 10 µm, vorzugsweise 0,1 bis 5 µm, besonders bevorzugt 0,15 bis 2,0 µm.

Monomere B.1.1 sind vorzugsweise Gemische aus

| | |
|---|---|
| B.1.1.1 | 50 bis 99 Gew.-Teilen Vinylaromaten und/oder kemsubstituierten Vinylaromaten (wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und |
| B.1.1.2 | 1 bis 50 Gew.-Teilen Vinylcyanide (ungesättigte Nitrile wie Acrylnitril und Methacrylnitril) und/oder (Meth)Acrylsäure-(C₁-C₈)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid. |

Bevorzugte Monomere B.1.1.1 sind ausgewählt aus mindestens einem der Monomere Styrol, α-Methylstyrol und Methylmethacrylat, bevorzugte Monomere B.1.1.2 sind ausgewählt aus mindestens einem der Monomere Acrylnitril, Maleinsäureanhydrid und Methylmethacrylat. Besonders bevorzugte Monomere sind B.1.1.1 Styrol und B.1.1.2 Acrylnitril.

Für die Pfropfpolymerisate B.1 geeignete Pfropfgrundlagen B.1.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen B.1.2 sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren (z.B. gemäß B.1.1. und B.1.1.2), mit der Maßgabe, dass die Glasübergangstemperatur der Komponente B.2 unterhalb < 10°C, vorzugsweise < 0°C, besonders bevorzugt < -20°C liegt. Besonders bevorzugt ist reiner Polybutadienkautschuk.

Besonders bevorzugte Polymerisate B.1 sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Die Pfropfcopolymerisate B.1 werden durch radikalische Polymerisation, z.B. durch Emulsions-, Suspensions-, Lösungs- oder Massepolymerisation, vorzugsweise durch Emulsions- oder Massepolymerisation, besonders bevorzugt durch Emulsionspolymerisation hergestellt.

Der Gelanteil der Pfropfgrundlage B.1.2 beträgt bei in Emulsionspolymerisation hergestellten Pfropfpolymerisaten mindestens 30 Gew.-%, vorzugsweise mindestens 40 Gew.-% (in Toluol gemessen).

Der Gelanteil von in Masse-Polymerisation hergestellten Pfropfpolymerisaten B.1 beträgt bevorzugt 10 bis 50 Gew.-%, insbesondere 15 bis 40 Gew.-% (in Aceton gemessen).

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B.1 auch solche Produkte verstanden, die durch (Co)Polymerisation der Pfropfmonomere in Gegenwart der Pfropfgrundlage gewonnen werden und bei der Aufarbeitung mit anfallen. Diese Produkte können demnach auch freies, d.h. nicht chemisch an den Kautschuk gebundenes (Co)Polymerisat der Pfropfmonomere enthalten.

Im Falle von Pfropfpolymerisaten B.1, die im Masse-Polymerisationsverfahren hergestellt wurden, beträgt das gewichtsgemittelte Molekulargewicht M_{w} des freien, d.h. nicht an den Kautschuk gebundenen (Co)Polymerisats bevorzugt 50.000 bis 250.000 g/mol, insbesondere 60.000 bis 180.000 g/mol, besonders bevorzugt 70.000 bis 130.000 g/mol.

Geeignete Acrylatkautschuke gemäß B.1.2 sind vorzugsweise Polymerisate aus Acrylsäurealkylestern, gegebenenfalls mit bis zu 40 Gew.-%, bezogen auf B.1.2 anderen polymerisierbaren, ethylenisch ungesättigten Monomeren. Zu den bevorzugten polymerisierbaren Acrylsäureestern gehören C₁ bis C₈-Alkylester, beispielsweise Methyl-, Ethyl-, Butyl-, n-Octyl- und 2-Ethylhexylester; Halogenalkylester, vorzugsweise Halogen-C₁-C₈-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.1.2. Bei cyclischen vernetzenden Monomeren mit mindestens drei ethylenisch ungesättigten Gruppen ist es vorteilhaft, die Menge auf unter 1 Gew.-% der Pfropfgrundlage B.1.2 zu beschränken.

Bevorzugte "andere" polymerisierbare, ethylenisch ungesättigte Monomere, die neben den Acrylsäureestern gegebenenfalls zur Herstellung der Pfropfgrundlage B.1.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.1.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.1.2 bzw. der Pfropfpolymere B.1 wird bei 25°C in einem geeigneten Lösungsmittel als in diesen Lösungsmitteln unlöslicher Anteil bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Bei den kautschukfreien Vinyl(Co)Polymerisaten B.2 handelt es sich um kautschukfreie Homo- und/oder Copolymerisate von mindestens einem Monomeren aus der Gruppe der Vinylaromaten, Vinylcyanide (ungesättigte Nitrile), (Meth)Acrylsäure-(C₁ bis C₈)-Alkylester, ungesättigten Carbonsäuren sowie Derivaten (wie Anhydride und Imide) ungesättigter Carbonsäuren.

Insbesondere geeignet sind (Co)Polymerisate B.2 aus

| | |
|---|---|
| B.2.1 | 50 bis 99 Gew.-%, bezogen auf das (Co)Polymerisat B.2, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C₁-C₈)-Alkylester (wie beispielsweise Methylmethacrylat, n-Butylacrylat, tert.-Butylacrylat) und |
| B.2.2 | 1 bis 50 Gew.-%, bezogen auf das (Co)Polymerisat B.2, mindestens eines Monomeren ausgewählt aus der Gruppe der Vinylcyanide (wie beispielsweise ungesättigte Nitrile wie Acrylnitril und Methacrylnitril), (Meth)Acrylsäure-(C₁-C₈)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid). |

Diese (Co)Polymerisate B.2 sind harzartig, thermoplastisch und kautschukfrei. Besonders bevorzugt ist das Copolymerisat aus Styrol und Acrylnitril.

Derartige (Co)Polymerisate B.2 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch GPC, Lichtstreuung oder Sedimentation) zwischen 15.000 und 250.000.

Als Komponente B kann ein reines Pfropfpolymerisat B.1 bzw. eine Mischung mehrerer Pfropfpolymerisate gemäß B.1, ein reines (Co)Polymerisat B.2 bzw. eine Mischung mehrerer (Co)Polymerisate gemäß B.2, oder eine Mischung aus mindestens einem Pfropfpolymerisat B.1 mit mindestens einem (Co)Polymerisat B.2 zum Einsatz kommen. Kommen Mischungen mehrerer Pfropfpolymerisate, Mischungen mehrerer (Co)Polymerisate oder Mischungen aus mindestens einem Pfropfpolymerisat mit mindestens einem (Co)Polymerisat zum Einsatz, so können diese bei der Herstellung der erfindungsgemäßen Zusammensetzungen separat oder auch in Form eines Präcompounds eingesetzt werden.

In bevorzugter Ausführungsform kommt als Komponente B ein reines Pfropfpolymerisat B.1 bzw. eine Mischung mehrerer Pfropfpolymerisate gemäß B.1 oder eine Mischung aus mindestens einem Pfropfpolymerisat B.1 mit mindestens einem (Co)Polymerisat B.2 zum Einsatz.

In besonders bevorzugter Ausführungsform kommt als Komponente B ein ABS-Pfropfpolymer hergestellt durch Emulsionspolymerisation oder ein ABS-Pfropfpolymer hergestellt durch Massepolymerisation oder eine Mischung aus einem in Emulsionspolymerisation hergestellten Pfropfpolymer und einem SAN-Copolymer zum Einsatz.

### Komponente C

Als Komponente C kommt natürlich vorkommender oder synthetisch hergestellter Talk zum Einsatz.

Reiner Talk hat die chemische Zusammensetzung 3 MgO·4SiO₂·H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.

Als Komponente C kommen bevorzugt solche Talktypen mit besonders hoher Reinheit zum Einsatz. Diese sind gekennzeichnet durch einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%. Besonders bevorzugte Talktypen zeichnen sich des Weiteren durch einen Al₂O₃-Gehalt von kleiner als 5 Gew.-%, besonders bevorzugt kleiner als 1 Gew.-%, insbesondere kleiner als 0,7 Gew.-%, aus.

Vorteilhaft ist insbesondere der Einsatz des Talkes in Form von feinvermahlenen Typen mit einer mittleren Partikeldurchmesser d₅₀ von <10 µm, bevorzugt <5 µm, besonders bevorzugt <2 µm, ganz besonders bevorzugt ≤1,5 µm.

Der Talk kann oberflächenbehandelt, z.B. silanisiert sein, um eine bessere Verträglichkeit mit dem Polymer zu gewährleisten. Im Hinblick auf die Verarbeitung und Herstellung der Formmassen ist der Einsatz kompaktierter Talks vorteilhaft.

### Komponente D

Als Komponente D kommen grundsätzlich alle Arten brönsted-saurer organischer oder anorganischer Verbindungen oder Mischungen daraus in Frage,

die sich unter Abspaltung von Wasser, Kohlenstoffmonoxid und/oder Kohlenstoffdioxid unter den Bedingungen der Compoundierung (d.h. bei 200°C bis 320°C, bevorzugt bei 240 bis 320°C besonders bevorzugt bei 240 bis 300°C) rückstandlos zersetzten, bevorzugt ist Oxalsäure.

### E) Weitere Komponenten

Die Zusammensetzung kann als Komponente E weitere Zusätze enthalten. Als weitere Zusätze gemäß Komponente E kommen insbesondere übliche Polymeradditive wie Flammschutzmittel (z.B. organische Phosphor- oder Halogenverbindungen, insbesondere Bisphenol-A basierendes Oligophosphat), Antidrippingmittel (beispielsweise Verbindungen der Substanzklassen der fluorierten Polyolefine, der Silikone sowie Aramidfasern), Gleit- und Entformungsmittel, beispielsweise Pentaerythrittetrastearat, Nukleiermittel, Antistatika, Stabilisatoren, von Talk verschiedene Füll- und Verstärkungsstoffe (beispielsweise Glas- oder Karbonfasern, Glimmer, Kaolin, CaCO₃ und Glasschuppen) sowie Farbstoffe und Pigmente (beispielsweise Titandioxid oder Eisenoxid) in Frage.

Die erfindungsgemäßen Zusammensetzungen sind frei von aromatischen oder teilaromatischen Polyestern, wie diese in WO-A 99/28386 offenbart sind. Unter aromatischen oder teilaromatischen Polyestern werden im Sinne der Erfindung nicht Polycarbonate verstanden, wie diese als Komponente A eingesetzt werden können. Die aromatischen Polyester leiten sich von aromatischen Dihydroxyverbindungen und aromatischen Dicarbonsäuren bzw. aromatischen Hydroxycarbonsäuren ab. Die teilaromatischen Polyester sind solche auf Basis von aromatischen Dicarbonsäuren und einer oder mehreren unterschiedlichen aliphatischen Dihydroxyverbindungen.

### Herstellung der Formmassen und Formkörper

Die erfindungsgemäßen thermoplastischen Formmassen können beispielsweise hergestellt werden, indem man die jeweiligen Bestandteile in bekannter Weise vermischt und bei Temperaturen von 200°C bis 320°C, bevorzugt bei 240 bis 320°C, besonders bevorzugt bei 240 bis 300°C in üblichen Aggregaten wie Innenknetem, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

In einer bevorzugten Ausführungsform erfolgt die Herstellung der erfindungsgemäßen Zusammensetzungen durch Mischung der Komponenten A bis D und ggf. weiterer Komponenten E bei Temperaturen im Bereich 200 bis 320°C, bevorzugt 240 bis 320°C, besonders bevorzugt bei 240 bis 300°C und einem Druck von maximal 500 mbar, bevorzugt maximal 200 mbar, insbesondere maximal 100 mbar in einem handelsüblichen Compoundieraggregat, bevorzugt in einem Doppelwellenextruder.

Ein bevorzugtes Verfahren zur Herstellung der Zusammensetzung, wenn die erfindungsgemäße Zusammensetzung mindestens eine Säure gemäß Komponente D2) enthält, ist dadurch gekennzeichnet, dass die Komponenten A bis E in einem handelsüblichen Mischaggregat aufgeschmolzen werden und bei einer Temperatur von 240 bis 320°C vermischt werden, wobei die unter diesen Bedingungen entstehenden flüchtigen Zersetzungsprodukte der Komponente D2) durch Anlegen eines Vakuums von p_{Abs} ≤ 500 mbar aus der Schmelze entfernt werden (Vakuumentgasung).

Gegenstand der Erfindung ist daher auch ein Verfahren zur Herstellung der erfindungsgemäßen Zusammensetzungen.

Die erfindungsgemäßen Formmassen können zur Herstellung von Formkörper jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Insbesondere eignen sich die erfindungsgemäßen Formmassen zur Herstellung von verzugs- und spannungsarmen, maßstabilen und duktilen Zweikomponenten-Bauteilen, bei denen eine transparente oder transluzente Polycarbonatformmasse als Erstkomponente vollständig oder partiell mit den erfindungsgemäßen talkverstärkten schlagzähmodifizierten Polycarbonat-Zusammensetzungen als Zweitkomponente hinterspritzt wurde und hieraus eine stabile Materialanbindung der Zweit- an die Erstkomponente resultiert. Die dabei als Erstkomponente eingesetzte transparente oder transluzente Polycarbonatformmasse enthält bevorzugt 95 bis 100 Gew.-%, besonders bevorzugt 98 bis 100 Gew.-% Polycarbonat gemäß Komponente A und 0 bis 5 Gew.-%, besonders bevorzugt 0 bis 2 Gew.-% Komponente E. Bei diesen 2-Komponenten-Bauteilen kann es sich beispielsweise um einen flächigen Materialverbund aus einer transparenten oder transluzenten Polycarbonatschicht mit einer opaken schlagzähmodifizierten Polycarbonat-Schicht, oder aber um einen Materialverbund aus einer transparenten oder transluzenten Fläche umrahmt von einem opaken Rahmen enthaltend die erfindungsgemäße schlagzähmodifizierte Polycarbonat-Zusammensetzung handeln. Derartige Materialverbunde können beispielsweise im Fenster- und Verscheibungsbereich, in Leuchtenanwendungen, bei optischen Linsen aus Polycarbonat mit angespritztem opaken Rahmen, bei Scheinwerferabdeckscheiben mit opaken Rahmen, bei nicht-transparenten, zur Erzielung einer Tiefenwirkung flächig mit transparentem Polycarbonat als Hochglanzschicht hinterspritzten Dekorabdeckungen, wobei eine opake schlagzähmodifizierte talkverstärkte erfindungsgemäße Polycarbonat-Zusammensetzung mit einer transparenten Polycarbonatzusammensetzung hinterspritzt wird, bei Blenden im Auto (z.B Säulenverkleidungen außen) und bei Monitor/Display-Abdeckungen aus Polycarbonat mit opakem Rahmen zum Einsatz kommen.

Oben genannte Zweikomponenten-Bauteile werden bevorzugt in einem Verfahren hergestellt, in dem die Erstkomponente mit der Zweitkomponente im Spritzguss- oder Spritzprägeverfahren hinterspritzt wird (Zweikomponentenspritzgussverfahren bzw. Zweikomponentenspritzprägeverfahren).

### Beispiele

### Komponente A:

Lineares Polycarbonat auf Basis Bisphenol-A mit einem gewichtsgemittelten Molekulargewicht M̅_{w} von ca. 28000 g/mol (bestimmt durch GPC).

### Komponente B-1:

ABS-Polymerisat hergestellt durch Masse-Polymerisation von 82 Gew.-% bezogen auf das ABS-Polymerisat einer Mischung aus 24 Gew.-% Acrylnitril und 76 Gew.-% Styrol in Gegenwart von 18 Gew.-% bezogen auf das ABS-Polymerisat eines Polybutadien-Styrol-Blockcopolymerkautschuks mit einem Styrolgehalt von 26 Gew.-%. Das gewichtsgemittelte Molekulargewicht M̅_{w} des freien SAN-Copolymeranteils in diesem ABS-Polymerisat beträgt 80000 g/mol (gemessen per GPC in THF). Der Gelgehalt des ABS-Polymerisats beträgt 24 Gew.-% (gemessen in Aceton).

### Komponente B-2:

Pfropfpolymerisat von 44 Gew.-Teilen eines Copolymerisats aus Styrol und Acrylnitril im Verhältnis von 73:27 auf 56 Gew.-Teile teilchenförmigen vernetzten Polybutadienkautschuk (mittlerer Teilchendurchmesser d₅₀ = 0,3 µm), hergestellt durch Emulsionspolymerisation.

### Komponente B-3:

SAN-Copolymerisat mit einem Acrylnitrilgehalt von 23 Gew.-% und einem gewichtsgemittelten Molekulargewicht von etwa 130000 g/mol.

### Komponente C:

Talk Naintsch^{®} A3c, Luzenac Naintsch (Graz, Österreich) mit einem mittleren Partikeldurchmesser d₅₀ von ca. 1,2 µm und einem Al₂O₃-Gehalt von 0,4 Gew.%.
**Komponente D-1:** wasserfreie Zitronensäure (Brenntag, Duisburg, Deutschland)
**Komponente D-2:** Terephthalsäure (Interquisa, Spanien)

**Komponente E-1:** Pentaerythrittetrastearat
**Komponente E-2:** Irganox^{®} B900 (Ciba, Basel, Schweiz)
**Komponente E-3:** Ruß Black Pearls 800 (Cabot, Leuven, Belgien)

### Herstellung und Prüfung der erfindungsgemäßen Formmassen

Das Mischen der Komponenten erfolgt auf einem Zweiwellenextruder ZSK-25 der Fa. Werner & Pfleiderer bei einer Massetemperatur von 260°C und unter Anlegen eines Unterdrucks von 50 mbar (absolut). Die Formkörper werden bei 260°C Massetemperatur und einer Werkzeugtemperatur von 80°C auf einer Spritzgießmaschine Typ Arburg 270 E hergestellt.

Die Schmelzflussrate (MVR) wird bestimmt nach ISO 1133 bei 260°C mit einer Stempellast von 5 kg. Ein erhöhter MVR gemessen am Granulat dient als Indikator für einen Abbau des Polycarbonat-Molekulargewichts in der Zusammensetzung während der Compoundierung und ist somit ein Maß für die thermische Stabilität bei der Compoundierung.

Als Maß für die thermische Verarbeitungsstabilität der Zusammensetzung dient die Änderung des MVRs (ΔMVR) gemessen nach ISO 1133 bei 260°C mit einer Stempellast von 5 kg während einer 15-minütigen thermischen Belastung bei 300°C.

Die Schlagzähigkeit wird bestimmt bei 23°C gemäß ISO 180-1U an Prüfkörpern der Abmessung 80 mm x 10 mm x 4mm. Berichtet wird ein Mittelwert aus 10 Einzelmessungen. Die Beurteilung "n.g." wird erteilt, sofern bei mindestens 50% der Einzelmessungen der Prüfkörper bei der Schlagprüfung nicht gebrochen ist.

Der Vicat B/120 als Maß für die Wärmeformbeständigkeit wird bestimmt gemäß ISO 306 an Prüfkörpern der Abmessung 80 mm x 10 mm x 4mm mit einer Stempellast von 50 N und einer Aufheizgeschwindigkeit von 120°C.

Zur Beurteilung der Neigung zum Auftreten von Verarbeitungsschlieren dient die visuelle Beurteilung der auf im Spritzguss bei 280°C mit einer Verweilzeit von 2,5 Minuten hergestellten Prüfplatten der Abmessung 60 mm x 40 mm x 2 mm.

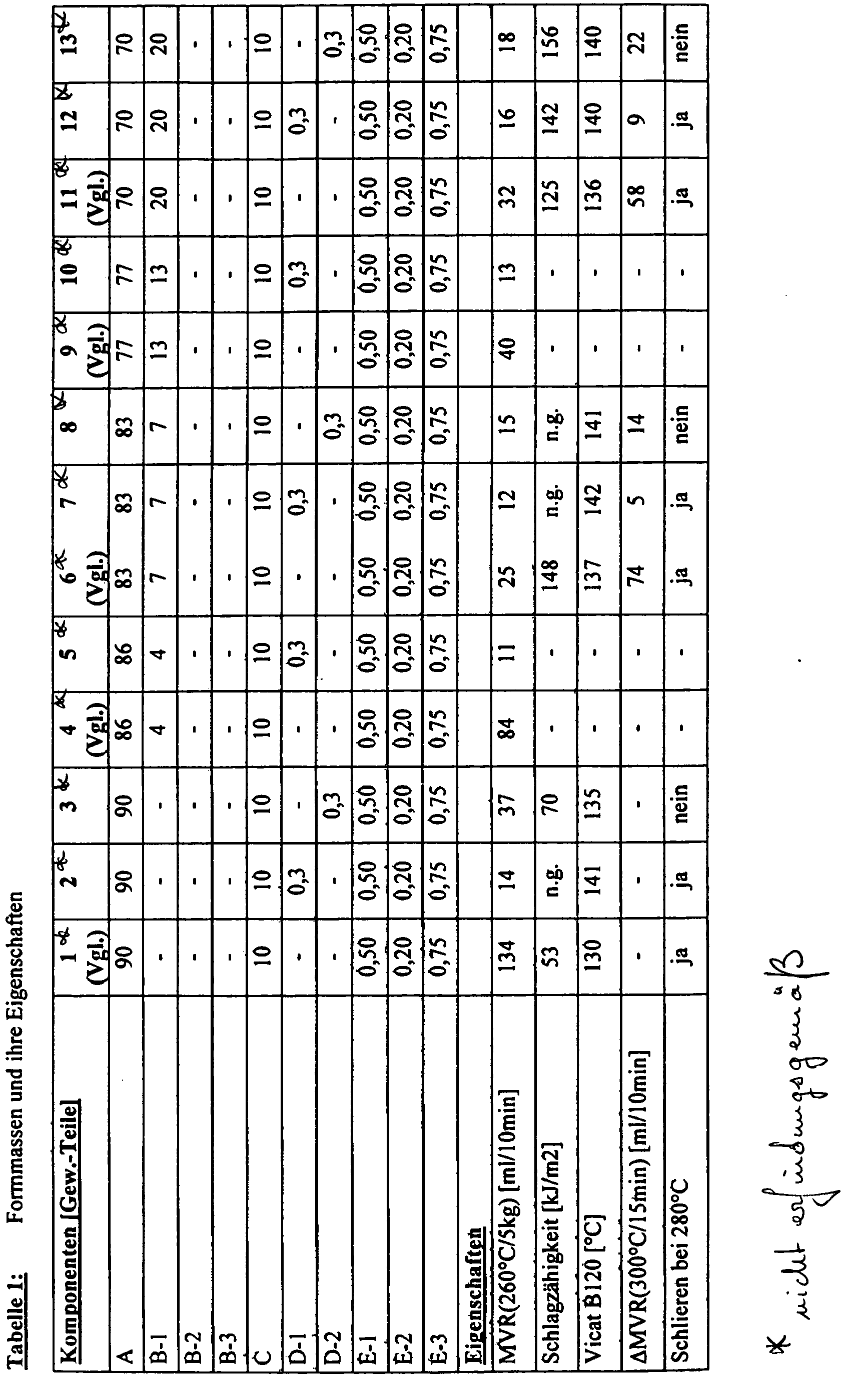

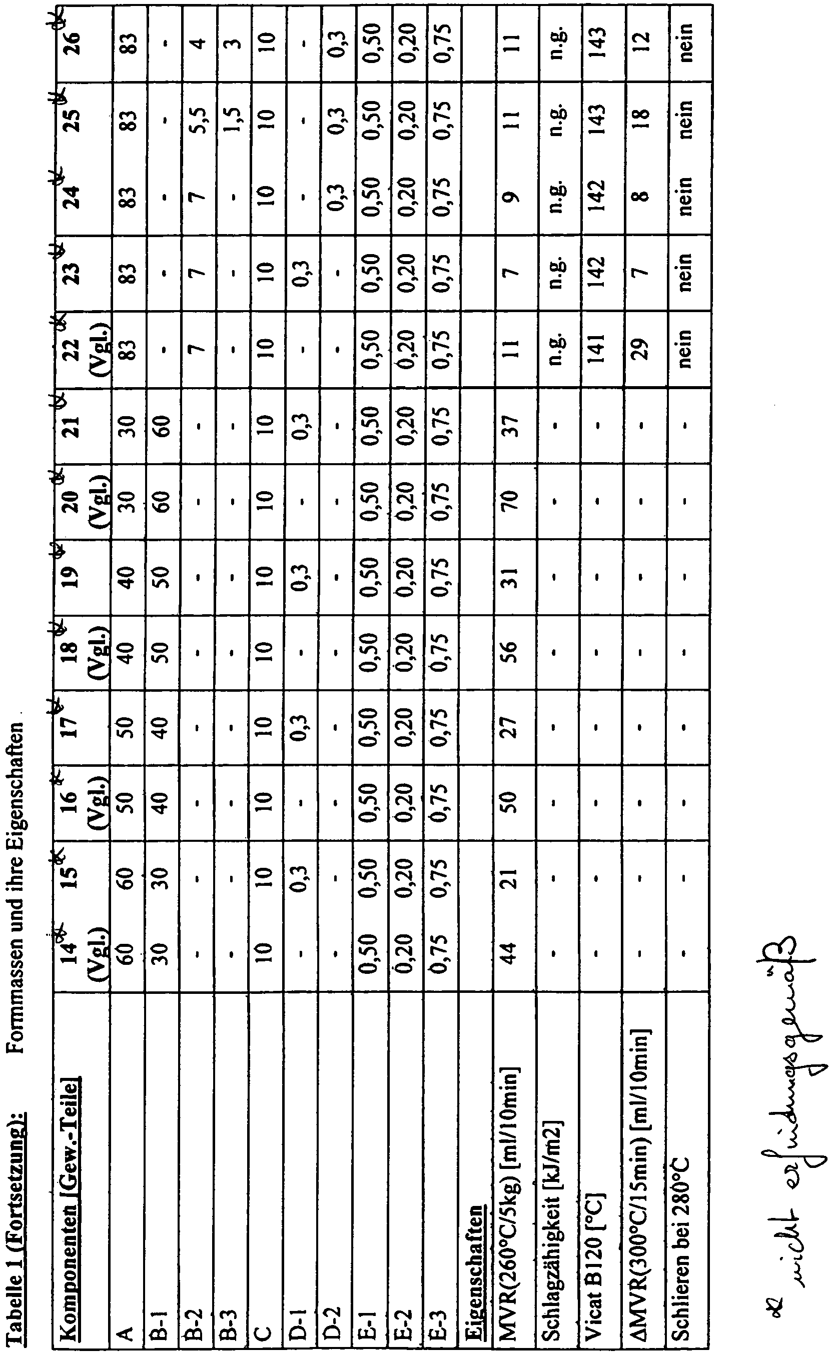

Der Tabelle 1 ist zu entnahmen, dass durch Zusatz kleiner Mengen brönsted-saurer Verbindungen zu talkgefüllten schlagzähmodifizierter Polycarbonat-Zusammensetzungen die thermische Stabilität solcher Zusammensetzungen im erfindungsgemäßen Bereich der PC:ABS-Verhältnisse bei der Compoundierung und Verarbeitung verbessert und die Duktilität (Schlagzähigkeit) und Wärmeformbeständigkeit (Vicat B120) in überraschender Weise erhöht wird. Insbesondere lassen sich auf diese Weise auch Zusammensetzungen mit hohen Polycarbonatgehalten sowie talkgefüllte" nicht schlagzähmodifizierten (ABS-freie) Polycarbonat-Zusammensetzungen mit hoher thermischer Stabilität realisieren (Beispiele 2, 3, 5, 7, 8 und 10). Insbesondere solche Zusammensetzungen mit hohem Polycarbonatgehalt erweisen sich ohne Zusatz dieser Säuren gemäß Komponente D erfahrungsgemäß als besonders thermisch instabil bereits bei der Compoundierung und in der nachfolgenden formgebenden Verarbeitung (Vergleichsbeispiele 1, 4, 6 und 9). Insbesondere wird überraschenderweise durch Brönstedt-Säuren bei einem Gehalt von 0,3 Gew.-% die Schlagzähigkeit der Polycarbonat-Zusammensetzungen um bis zu 25 %, in einigen Fällen bis zu 32% erhöht.

Bei Verwendung thermisch stabiler Säuren wie Terephthalsäure (Komponente D-2) resultiert eine weitere Verbesserung der Verarbeitungsstäbilität im Vergleich zu ähnlichen Einstellungen, in denen solche Säuren zum Einsatz kommen, die sich unter den thermischen Bedingungen der Compoundierung zersetzen. Dieses äußert sich in einer Reduktion der Schlierenneigung bei der Verarbeitung im Spritzguss (vergleiche jeweils Beispiele 2 und 3, 7 und 8 sowie 12 und 13).

## Patentansprüche

1. Zusammensetzungen enthaltend
A) 10 bis 100 Gew.-Teile bezogen auf die Summe der Komponenten A und B an Polycarbonat, Polyestercarbonat oder eine Mischung daraus,
B) 0 bis 90 Gew.-Teile bezogen auf die Summe der Komponenten A und B an einem Polymerisat ausgewählt aus mindestens einem der Gruppe bestehend aus Pfropfpolymerisat hergestellt im Emulsionspolymerisationsverfahren, Pfropfpolymerisat hergestellt im Massepolymerisationsverfahren, kautschukfreies Vinylhomopolymerisat und kautschukfreies Vinylcopolymerisat,
C) 7 bis 30 Gew.-% bezogen auf die Gesamtzusammensetzung Talk,
D) 0,01 bis 1 Gew.-% bezogen auf die Gesamtzusammensetzung einer Brönstedt-Säure, wobei sich die Brönstedt-Säure unter Abspaltung von Wasser, Kohlenstoffmonoxid und/oder Kohlenstoffdioxid__unter den Bedingungen der Compoundierung bei 200°C bis 320°C rückstandlos zersetzt,
E) 0 bis 20 Gew.-% bezogen auf die Gesamtzusammensetzung mindestens eines Polymeradditivs,
wobei die Zusammensetzung frei ist von aromatischen oder teilaromatischen Polyestern, wobei sich die Summe der Gew.-% der Komponenten A und B in der Gesamtzusammensetzung berechnet aus der Differenz von 100 Gew.-% minus der Summe der Gew.-% der Komponenten C, D und E, und
wobei unter Gesamtzusammensetzung die Summe der Gew.-% aller Komponenten A + B+ C + D + E zu verstehen ist.

2. Zusammensetzung gemäß Anspruch 1, enthaltend
A) 80 bis 100 Gew.-Teile bezogen auf die Summe der Komponenten A und B an Polycarbonat, Polyestercarbonat oder eine Mischung daraus, und
B) 0 bis 20 Gew.-Teile bezogen auf die Summe der Komponenten A und B an einem Polymerisat ausgewählt aus mindestens einem der Gruppe bestehend aus Pfropfpolymerisat hergestellt im Emulsionspolymerisationsverfahren, Pfropfpolymerisat hergestellt im Massepolymerisationsverfahren, kautschukfreies Vinylhomopolymerisat und kautschukfreies Vinylcopolymerisat.

3. Zusammensetzung gemäß Anspruch 1, enthaltend
A) 100 Gew.-Teile bezogen auf die Summe der Komponenten A und B an Polycarbonat, Polyestercarbonat oder eine Mischung daraus, und
B) 0 Gew.-Teile bezogen auf die Summe der Komponenten A und B an Komponente B.

4. Zusammensetzung gemäß einem der Ansprüche 1 bis 3, enthaltend als Komponente C einen Talk mit einem Al₂O₃-Gehalt < 1,0 Gew.-%.

5. Zusammensetzung gemäß einem der Ansprüche 1 bis 4, enthaltend als Komponente C einen Talk mit einem mittleren Partikeldurchmesser d₅₀ von < 2 µm.

6. Zusammensetzung gemäß einem der Ansprüche 1 bis 5, enthaltend als Komponente E mindestens eine Komponente ausgewählt aus der Gruppe bestehend aus Flammschutzmittel, Antidrippingmittel, Gleit- und Entformungsmittel, Nulcleiermittel, Antistatika, Stabilisatoren, von Talk verschiedene Füll- und Verstärkungsstoffe sowie Farbstoffe und Pigmente.

7. Zusammensetzung nach einem der Ansprüchen 1-6, **dadurch gekennzeichnet, daß** Komponente D Oxalsäure ist.

8. Zusammensetzung gemäß einem der Ansprüche 1 bis 7, enthaltend Komponente D in einem Anteil von 0,02 bis 0,4 Gew.-%.

9. Verfahren zur Herstellung einer Zusammensetzung gemäß Anspruch 1, wobei die Komponenten A bis E in einem handelsüblichen Mischaggregat aufgeschmolzen und bei einer Temperatur von 240 bis 320°C die Schmelzen gemischt werden und die unter diesen Bedingungen entstehenden etwaigen flüchtigen Zersetzungsprodukte der Komponente D durch Anlegen eines Vakuums von p_{Abs} ≤ 500 mbar aus der Schmelze entfernt werden.

10. Verwendung der Zusammensetzungen nach einem der Ansprüche 1 bis 8 zur Herstellung von Formkörpern.

11. Formkörper enthaltend eine Zusammensetzung nach einem der Ansprüche 1 bis 8.

## Claims

1. Compositions comprising
A) from 10 to 100 parts by weight, based on the entirety of components A and B, of polycarbonate, polyester carbonate or a mixture thereof,
B) from 0 to 90 parts by weight, based on the entirety of components A and B, of a polymer selected from at least one of the group consisting of graft polymer produced by the emulsion polymerization process, graft polymer produced by the bulk polymerization process, rubber-free vinyl homopolymer and rubber-free vinyl copolymer,
C) from 7 to 30% by weight, based on the entire constitution, of talc,
D) from 0.01 to 1% by weight, based on the entire constitution, of a Bronsted acid, where the Bronsted acid decomposes under the conditions of compounding at from 200°C to 320°C with elimination of water, carbon monoxide and/or carbon dioxide, leaving no residue,
E) from 0 to 20% by weight, based on the entire constitution, of at least one polymer additive,
where the constitution is free of aromatic or semiaromatic polyesters,
where the total of the % by weight values for components A and B in the entire constitution is calculated from the difference between 100% by weight and the total of the % by weight values for components C, D and E, and
where entire compositions means the total of the % by weight values for all of the components A + B + C + D + E.

2. Composition according to Claim 1, comprising
A) from 80 to 100 parts by weight, based on the entirety of components A and B, of polycarbonate, polyester carbonate or a mixture thereof,
B) from 0 to 20 parts by weight, based on the entirety of components A and B, of a polymer selected from at least one of the group consisting of graft polymer produced by the emulsion polymerization process, graft polymer produced by the bulk polymerization process, rubber-free vinyl homopolymer and rubber-free vinyl copolymer.

3. Composition according to Claim 1, comprising
A) 100 parts by weight, based on the entirety of components A and B, of polycarbonate, polyester carbonate or a mixture thereof, and
B) 0 parts by weight, based on the entirety of components A and B, of component B.

4. Composition according to any of Claims 1 to 3, comprising, as component C, a talc with < 1.0% by weight of Al₂O₃ content.

5. Composition according to any of Claims 1 to 4, comprising, as component C, a talc with a median particle diameter d₅₀ of < 2 µm.

6. Composition according to any of Claims 1 to 5, comprising, as component E, at least one component selected from the group consisting of flame retardants, antidrip agents, lubricant and mould-release agents, nucleating agents, antistatic agents, stabilizers, non-talc fillers and non-talc reinforcing materials, dyes and pigments.

7. Composition according to any of Claims 1-6, **characterized in that** component D is oxalic acid.

8. Composition according to any of Claims 1 to 7, comprising a proportion of from 0.02 to 0.4% by weight of component D.

9. Process for producing a composition according to Claim 1, where components A to E are melted in a commercially available mixing assembly, and the melts are mixed at a temperature of from 240 to 320°C, and any volatile decomposition products arising under these conditions from component D are removed from the melt by applying a vacuum of p_{Abs} ≤ 500 mbar.

10. Use of the compositions according to any of Claims 1 to 8 for producing mouldings.

11. Moulding comprising a composition according to any of Claims 1 to 8.

## Revendications

1. Compositions contenant
A) 10 à 100 parties en poids, par rapport à la somme des composants A et B, de polycarbonate, polyestercarbonate ou d'un mélange de ceux-ci,
B) 0 à 90 parties en poids, par rapport à la somme des composants A et B, d'un polymérisat choisi parmi au moins l'un du groupe consistant en un polymérisat greffé produit dans le procédé de polymérisation en émulsion, un polymérisat greffé produit dans le procédé de polymérisation en masse, un homopolymérisat vinylique exempt de caoutchouc et un copolymérisat vinylique exempt de caoutchouc,
C) 7 à 30 % en poids, par rapport à la composition totale, de talc,
D) 0,01 à 1 % en poids, par rapport à la composition totale, d'un acide de Brönsted, l'acide de Brönsted étant décomposé sans résidu, dans les conditions du compoundage à une température de 200 °C à 320 °C, avec élimination d'eau, de monoxyde de carbone et/ou de dioxyde de carbone,
E) 0 à 20 % en poids, par rapport à la composition totale, d'au moins un additif pour polymère,
la composition étant exempte de polyesters aromatiques ou partiellement aromatiques,
la somme des % en poids des composants A et B dans la composition totale étant calculée d'après la différence de 100 % en poids moins la somme des % en poids des composants C, D et E, et
en entendant par composition totale la somme des % en poids de tous les composants A + B + C + D + E.

2. Composition selon la revendication 1, contenant
A) 80 à 100 parties en poids, par rapport à la somme des composants A et B, de polycarbonate, polyestercarbonate ou d'un mélange de ceux-ci, et
B) 0 à 20 parties en poids, par rapport à la somme des composants A et B, d'un polymérisat choisi parmi au moins l'un du groupe consistant en un polymérisat greffé produit dans le procédé de polymérisation en émulsion, un polymérisat greffé produit dans le procédé de polymérisation en masse, un homopolymérisat vinylique exempt de caoutchouc et un copolymérisat vinylique exempt de caoutchouc.

3. Composition selon la revendication 1, contenant
A) 100 parties en poids, par rapport à la somme des composants A et B, de polycarbonate, polyestercarbonate ou d'un mélanges de ceux-ci, et
B) 0 partie en poids, par rapport à la somme des composants A et B, de composant B.

4. Composition selon l'une quelconque des revendications 1 à 3, contenant en tant que composant C un talc ayant une teneur en Al₂O₃ < 1,0 % en poids.

5. Composition selon l'une quelconque des revendications 1 à 4, contenant en tant que composant C un talc ayant un diamètre moyen de particule d₅₀ de < 2 µm.

6. Composition selon l'une quelconque des revendications 1 à 5, contenant en tant que composant E au moins un composant choisi dans le groupe constitué par des agents ignifuges, des agents anticoulure, des lubrifiants et agents de démoulage, des agents de nucléation, des agents antistatiques, des stabilisants, des charges et substances de renfort différentes du talc ainsi que des colorants et pigments.

7. Composition selon l'une quelconque des revendications 1-6, **caractérisée en ce que** le composant D est l'acide oxalique.

8. Composition selon l'une quelconque des revendications 1 à 7, contenant le composant D en une proportion de 0,02 à 0,4 % en poids.

9. Procédé pour la préparation d'une composition selon la revendication 1, dans lequel on fait fondre les composants A à E dans un appareil de mélange du commerce et on mélange à une température de 240 à 320 °C les masses fondues et on élimine des masses fondues les éventuels produits volatils de décomposition du composant D, formés dans ces conditions, par application d'un vide de p_{abs} ≤ 500 mbars.

10. Utilisation des compositions selon l'une quelconque des revendications 1 à 8, pour la production de corps moulés.

11. Corps moulé contenant une composition selon l'une quelconque des revendications 1 à 8.
